# EUROPÄISCHE PATENTANMELDUNG

(11) **EP 1 847 746 A1**
(43) Veröffentlichungstag der Anmeldung: **24.10.2007**
(21) Anmeldenummer: 07005804.5
(22) Anmeldetag: 21.03.2007
(51) Int. Cl.: F16L 3/10, F16L 55/035, F16L 3/22

(54) **Halteeinrichtung für mindestens eine Leitung**

(30) Priorität: 19.04.2006 DE 202006006347 U
(71) Anmelder: VERITAS AG, 63571 Gelnhausen (DE)
(72) Erfinder: Allmann, Günter, 35444 Biebertal-Frankenbach (DE); Roth, Roland, 35454 Heuchelheim (DE)
(74) Vertreter: Grünecker, Kinkeldey, Stockmair & Schwanhäusser Anwaltssozietät

(57) **Zusammenfassung**

Die Erfindung betrifft eine Halteeinrichtung für mindestens eine Leitung oder dergleichen, umfassend: Ein Gehäuse mit einem Grundkörper und einem gegenüber dem Grundkörper bewegbaren Deckel, einen Einsatz zum Einsetzen in das Gehäuse, wobei der Einsatz zumindest eine im Wesentlichen U-förmige Leitungsaufnahme aufweist, in welche die Leitung durch einen Einführschlitz in radialer Richtung einbringbar ist, so dass der Einsatz die Leitung zumindest abschnittsweise umgibt. Um die Halteeinrichtung dahingehend zu verbessern, dass sie eine verbesserte akustische Abkopplung bei einem erheblich vereinfachten Aufbau erreicht, ist erfindungsgemäß vorgesehen, dass der Einsatz ein flexible Lasche aufweist, welche ausgebildet ist, um den Einführschlitz bei geschlossenem Deckel zumindest abschnittsweise zu verschließen.

## Beschreibung

Die Erfindung betrifft eine Halteeinrichtung für mindestens eine Leitung oder dergleichen, umfassend: Ein Gehäuse mit einem Grundkörper und einem gegenüber dem Grundkörper bewegbaren Deckel, einen Einsatz zum Einsetzen in das Gehäuse, wobei der Einsatz zumindest eine im Wesentlichen U-förmige Leitungsaufnahme aufweist, in welche die Leitung durch einen Einführschlitz in radialer Richtung einbringbar ist, so dass der Einsatz die Leitung zumindest abschnittsweise umgibt.

Eine gattungsgemäße Halteeinrichtung ist beispielsweise aus der DE 198 10 834 A1 bekannt.

Derartige Halteeinrichtung werden benutzt, um Impulse, die beim Übertragen von Flüssigkeiten oder gasförmigen Medien durch Leitungen in Folge von Druckstößen erzeugt werden, zu absorbieren. Dies soll verhindern, dass die Impulse auf eine Trägerstruktur, an welcher die Leitungen zu befestigen sind, übertragen werden. Die Impulsabsorption durch die Halteeinrichtung wird als akustische Abkopplung bezeichnet.

Mit der herkömmlichen Halteeinrichtung kann eine Leitung durch Verschließen des Deckels im Wesentlichen verliersicher an der Trägerstruktur befestigt werden.

Die herkömmliche Halteinrichtung umfasst jedoch einen komplexen mehrteiligen Aufbau und kann in einer Leitungsaufnahme jeweils nur eine Leitung mit einem bestimmten Querschnitt aufnehmen. Hat die Leitung jedoch gegenüber dem vorgesehenen Querschnitt der Leitungsaufnahme einen auch nur geringfügig kleineren Querschnitt, so hat die Leitung Spiel und kann nicht sicher in der Leitungsaufnahme fixiert werden. Infolge dessen ist die akustische Abkopplung unzureichend.

Der Erfindung liegt die Aufgabe zugrunde, die herkömmliche Halteeinrichtung dahingehend zu verbessern, dass sie eine verbesserte akustische Abkopplung bei einem erheblich vereinfachten Aufbau erreicht.

Zur Lösung dieser Aufgabe stellt die Erfindung die Halteeinrichtung nach Anspruch 1 bereit. Anspruch 1 beansprucht eine Halteeinrichtung für mindestens eine Leitung oder dergleichen, umfassend: Ein Gehäuse mit einem Grundkörper und einem gegenüber dem Grundkörper bewegbaren Deckel, einen Einsatz zum Einsetzen in das Gehäuse, wobei der Einsatz zumindest eine im Wesentlichen U-förmige Leitungsaufnahme aufweist, in welche die Leitung durch einen Einführschlitz in radialer Richtung einbringbar ist, so dass der Einsatz die Leitung zumindest abschnittsweise umgibt, wobei der Einsatz eine flexible Lasche aufweist, welche ausgebildet ist, um den Einführschlitz bei geschlossenem Deckel zumindest abschnittsweise zu verschließen. Durch die Lasche wird die Leitung bei geschlossenem Deckel zusätzlich fixiert. Die Lasche ist Teil des Einsatzes; ein gesondertes Bauteil zur Fixierung der Leitung ist somit nicht mehr notwendig. Die Lasche ist flexibel und passt sich der Kontur der Leitung auch bei unterschiedlichen Durchmessern an. Insgesamt wird eine bessere akustische Abkopplung der Leitung von der Trägerstruktur bei einem erheblich vereinfachten Aufbau der Halteeinrichtung erreicht.

In einer bevorzugten Ausführungsform der Erfindung weist der Einsatz zumindest einen flexiblen Haltevorsprung auf, der sich in die Leitungsaufnahme hinein erstreckt. Dies hat den Vorteil, dass Leitungen verschiedener Querschnitte in der Leitungsaufnahme aufgenommen und jeweils positionssicher fixiert werden können. Bei einer Leitung mit größerem Querschnitt gibt der flexible Haltevorsprung nach und vergrößert den Druck auf die Leitung, die dadurch noch besser fixiert wird.

In einer bevorzugten Ausführungsform der Erfindung ist der Haltevorsprung rippenförmig ausgebildet. Dabei wird der Druck auf die Leitung linienförmig verteilt.

In einer bevorzugten Ausführungsform der Erfindung umfasst der Einsatz einen flexiblen Anlagevorsprung, der auf einer Anlageseite der Halteeinrichtung aus dem Gehäuse hervorsteht. Dabei wird eine besonders gute akustische Abkopplung der Leitung gegenüber einer Trägereinrichtung erreicht, weil zwischen der Leitung und der Trägereinrichtung ausschließlich der Einsatz, der vorzugsweise aus weichem bzw. federndem Material besteht und absorbierend wirkt, angeordnet ist.

In einer bevorzugten Ausführungungsform der Erfindung durchdringt der Anlagevorsprung das Gehäuse. Das Gehäuse ist vorzugsweise aus widerstandsfähigem bzw. hartem Material gefertigt, um die Leitung sicher in Position zu halten. Die akustische Abkopplung der Leitung von der Trägerstruktur wird aber entscheidend durch die Materialeigenschaften des Einsatzes beeinflusst. Wenn der Einsatz das Gehäuse durchdringt, kann er auf einfache Weise mit der Trägerstruktur in Anlage gebracht werden, so dass bei optimaler Fixierung der Leitung durch das Gehäuse gleichzeitig eine optimale akustische Abkopplung der Leitung von der Trägerstruktur durch den Einsatz bewerkstelligt wird.

In einer bevorzugten Ausführungsform der Erfindung ist der Anlagevorsprung rippenförmig ausgebildet. Dabei wird der Kontaktdruck zwischen dem Anlagevorsprung und der Trägereinrichtung linienförmig verteilt und die Halteeinrichtung stabil gelagert.

In einer bevorzugten Ausführungsform der Erfindung sind der Grundkörper und der Deckel über ein Scharnier gelenkig verbunden und gegeneinander verschwenkbar. So geht der Deckel beim Transport nicht verloren.

In einer bevorzugten Ausführungsform der Erfindung weist das Gehäuse einen Verriegelungsabschnitt mit einem Vorsprung auf, welcher mit einem Verriegelungsabschnitt mit einer Öse in Eingriff bringbar ist, um das Gehäuse bei geschlossenem Deckel zu verriegeln. Dabei wird die Leitung sicher im Gehäuse fixiert.

In einer bevorzugten Ausführungsform der Erfindung weisen der Grundkörper, der Deckel und der Einsatz jeweils eine Durchgangsbohrung zur Aufnahme eines Bolzens auf, wobei die Mittelpunkte der Durchgangsbohrungen bei geschlossenem Deckel im Wesentlichen auf einer Achse liegen. So kann die Halteeinrichtung wahlweise bei geschlossenem und / oder bei geöffnetem Deckel an einer Trägereinrichtung montiert werden. Alternativ kann ein Bolzen an dem Gehäuse der Halteeinrichtung bereits angeformt sein, welcher in eine vorbestimmte Öffnung der Trägereinrichtung einsetzbar ist.

Der Haltevorsprung und/oder der Anlagevorsprung und/oder die Lasche ist vorzugsweise einteilig mit dem Einsatz ausgebildet, was eine besonders einfache Herstellung im Spritzgussverfahren ermöglicht.

Bevorzugte Ausführungsbeispiele der Erfindung werden in den Unteransprüchen beansprucht.

**Kurze Beschreibung der Zeichnungen:**
- Figur 1: zeigt eine perspektivische Ansicht des Einsatzes der erfindungsgemäßen Halteeinrichtung.
- Figur 2: zeigt eine perspektivische Ansicht des Gehäuses der erfindungsgemäßen Halteeinrichtung bei geöffnetem Deckel.
- Figur 3: zeigt die erfindungsgemäße Halteeinrichtung bei geöffnetem Deckel, wobei der Einsatz in das Gehäuse eingesetzt ist.
- Figur 4: zeigt die erfindungsgemäße Halteeinrichtung bei geschlossenem Deckel und in den Leitungsaufnahmen aufgenommene Leitungen.

### Detaillierte Beschreibung der bevorzugten Ausführungsbeispiele:

Die bevorzugten Ausführungsbeispiele der Erfindung werden nachstehend mit Bezug auf die beiliegenden Zeichnungen beschrieben.

Im Rahmen der Erfindungsbeschreibung werden positionsangebende Begriffe wie *"oben", "unten","links","rechts",* etc. verwendet, welche der besseren Verständlichkeit der Beschreibung dienen und sich nur auf die jeweilige Figurendarstellung beziehen. Derartige Begriffe haben darüber hinaus keinen bindenden Charakter.

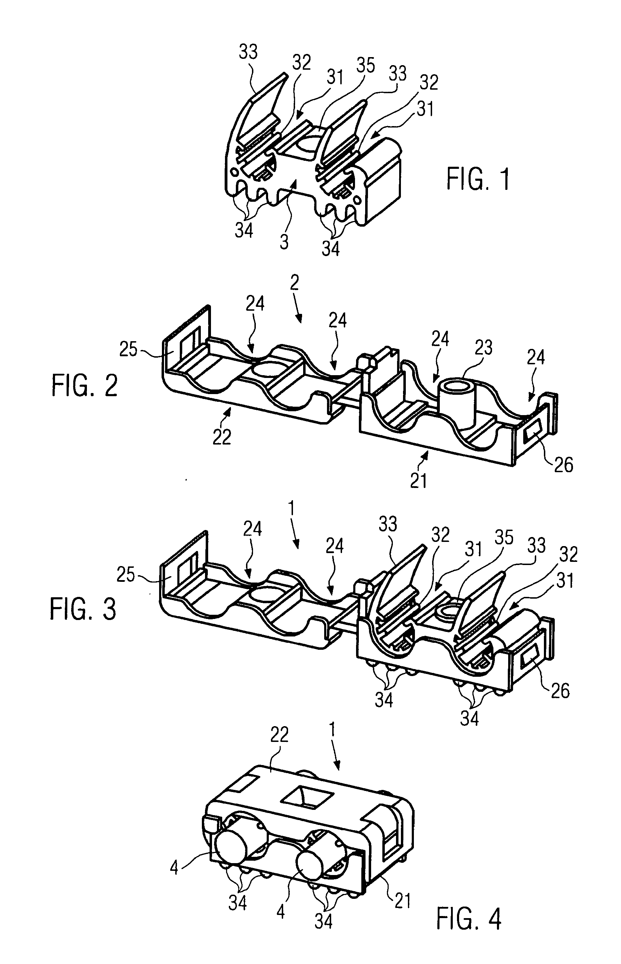

Figur 1 zeigt den Einsatz 3 der erfindungsgemäßen Halteeinrichtung 1 in einer perspektivischen Ansicht. Der Einsatz 3 umfasst zwei im Wesentlichen U-förmige Leitungsaufnahmen 31 und einen zwischen den Leitungsaufnahmen 31 mittig angeordneten Befestigungsabschnitt 35 mit mittiger Durchgangsbohrung. Vorzugsweise sind eine bis sechs Leitungsaufnahmen 31 vorgesehen, wobei die Leitungsaufnahmen 31 bei einer geraden Anzahl vorzugsweise symmetrisch zum Befestigungsabschnitt 35 angeordnet sind. Die Breite des Einsatzes 3 bzw. die axiale Länge jeder Leitungsaufnahme 31 beträgt vorzugsweise das eineinhalb- bis zweifache des Durchmessers einer in der Leitungsaufnahme 31 aufzunehmenden Leitung 4.

Jede Leitungsaufnahme 31 ist im Wesentlichen U-förmig ausgebildet und umfasst einen im Wesentlichen halbkreisförmigen Halteabschnitt und einen Einführschlitz, über welchen der Halteabschnitt zugänglich ist und über welchen eine Leitung 4 in radialer Richtung in den Halteabschnitt eingebracht wird. Elastische und flexible Halterippen 32 stehen im Wesentlichen radial von der Innenwand in die Leitungsaufnahme 31 hervor. Die Halterippen 32 sind einteilig mit dem Einsatz 3 ausgebildet und sind aus dem selben Material hergestellt. Sie bilden die flexiblen Haltevorsprünge im Sinne der Erfindung. Die Halterippen 32 erstrecken sich in axialer Richtung einer in der Leitungsaufnahme 31 bestimmungsgemäß aufgenommenen Leitung (siehe Fig. 4) und sind im Wesentlichen gleichmäßig voneinander beabstandet. Die Halterippen 32 verlaufen im Wesentlichen parallel zueinander und können unterschiedlich weit in die Leitungsaufnahme 31 hervorstehen.

An jeder Leitungsaufnahme 31 ist randseitig eine einteilig mit dem Einsatz 3 ausgebildete Lasche 33 vorgesehen. Die Lasche 33 erstreckt sich jeweils über die gesamte Breite des Einsatzes 3 und weist eine derartige Länge und Flexibilität auf, um den Einführschlitz der zugehörigen Leitungsaufnahme 31 bei entsprechender Biegung überbrücken zu können. Die freie Länge der Lasche 33 entspricht im Wesentlichen dem Durchmesser des Halteabschnitts der Leitungsaufnahme 31.

Von der Unterseite des Einsatzes 3 stehen elastische und flexible Anlagerippen 34 hervor. Die Anlagerippen 34 sind einteilig mit dem Einsatz 3 ausgebildet und sind aus dem selben Material wie der Einsatz 3 hergestellt. Sie bilden die Anlagevorsprünge 34 im Sinne der Erfindung. Die Anlagerippen 34 erstrecken sich über die volle Breite des Einsatzes 3 in axialer Richtung einer in der Leitungsaufnahme 31 bestimmungsgemäß aufgenommenen Leitung (siehe Fig. 4), d.h. sie verlaufen im Wesentlichen parallel zueinander und sind im Wesentlichen gleichmäßig voneinander beabstandet. Die Anlagevorsprünge 34 stehen über eine Länge von ca. der Hälfte des Durchmessers eines Halteabschnitts über die Unterseite des Einsatzes 3 hervor.

Figur 2 zeigt das Gehäuse 2 der erfindungsgemäßen Halteeinrichtung 1. Das Gehäuse 2 umfasst einen Grundkörper 21 und einen über ein Scharnier gelenkig mit dem Grundkörper 21 verbundenen Deckel 22. Der Grundkörper 21 und der Deckel 22 weisen an den Rändern jeweils vier im Wesentlichen halbkreisförmige Aussparungen 24 auf, von denen sich jeweils zwei in axialer Richtung gegenüber liegen. Bei geschlossenem Deckel 22 setzen sich die halbkreisförmigen Aussparungen 24 zu kreisförmigen Aussparungen zusammen. Durch die Aussparungen 24 werden Leitungen 4 in das Gehäuse eingeführt und wieder aus dem Gehäuse herausgeführt, wie in Figur 4 dargestellt ist.

Ein Gehäuseboden des Grundkörpers 21 ist mit schlitzförmigen Öffnungen versehen, durch welche die rippenförmigen Anlagevorsprünge 34 des eingesetzten Einsatzes 3, wie in den Figuren 3 und 4 dargestellt, aus dem Gehäuse 2 hervorstehen. Zur Positionierung des Einsatzes 3 im Grundkörper 21 ist ein zylindrischer Zapfen 23 mit mittiger Durchgangsbohrung vorgesehen, dessen Außendurchmesser auf den Innendurchmesser der Bohrung des Einsatzes 3 abgestimmt ist. Der zylindrische Zapfen 23 steht senkrecht vom Boden des Grundkörpers 21 hervor. Die Höhe des zylindrischen Zapfens 23 ist so gewählt, dass der obere Rand des Zapfens 23 bei eingesetztem Einsatz 3 im Wesentlichen auf gleicher Höhe mit der Oberseite des Einsatzes 3 im Bereich des Befestigungsabschnitts 35 liegt. Der Zapfen 23 ist vorzugsweise einteilig mit dem Gehäuse 2 ausgebildet, wobei das Gehäuse 2 vorzugsweise aus Kunststoff hergestellt wird.

Auch der Deckel 22 ist mit einer mittigen Durchgangsbohrung versehen. Die Positionen der Durchgangsbohrungen des Grundkörpers 21, des Deckels 22 und des Einsatzes 3 sind derart aufeinander abgestimmt, so dass bei geschlossenem Deckel 22 die Mittelpunkte der Durchgangsbohrungen auf einer Achse liegend angeordnet sind und ein Bolzen in die Durchgangsbohrungen einsetzbar ist.

Um den Deckel 22 in geschlossenem Zustand am Grundkörper 21 zu fixieren, ist eine Verriegelungseinrichtung vorgesehen. Am Grundkörper 21 ist ein Verriegelungsabschnitt 26 mit einem Vorsprung vorgesehen, welcher mit einem Verriegelungsabschnitt 25 mit einer Öse, der am Deckel 22 vorgesehen ist, in Eingriff gebracht werden kann. Der Verriegelungsabschnitt 26 mit Vorsprung ist federnd ausgebildet und federt bei Kontakt mit dem Verriegelungsabschnitt 25 zunächst zurück. Wenn Vorsprung und Öse übereinander liegen, schnappt der Verriegelungsabschnitt 26 ein und verhindert ein Auseinanderführen des Grundkörpers 21 und des Deckels 22. Der Eingriff des Grundkörpers 21 und des Deckels 22 lässt sich dadurch lösen, dass eine Druckkraft entgegen der Federkraft auf den Verriegelungsabschnitt 26 ausgeübt wird und der Vorsprung aus der Öse entfernt wird.

Figur 3 zeigt die erfindungsgemäße Halteeinrichtung 1, wobei der Einsatz 3 in den Grundkörper 21 des Gehäuses 2 eingesetzt ist. Der Einsatz 3 ist im Grundkörper 21 des Gehäuses 2 so angeordnet, dass die Laschen 33 jeweils an dem zum Scharnier weisenden Rand jeder Leitungsaufnahme 31 angeordnet sind. In dem Zustand bei geöffnetem Deckel 22 ist jede Lasche 33 vom Einsatz 3 abgespreizt, so dass der Einführschlitz jeder Leitungsaufnahme 31 über in etwa den gesamten Querschnitt des halbkreisförmigen Halteabschnitts jeder Leitungsaufnahme 31 frei liegt und eine Leitung 4 einlegbar ist. Bei eingesetztem Einsatz 3 stehen die Anlagevorsprünge 34, wie in Figur 3 gezeigt wird, auf der Anlageseite des Gehäuses 2 aus dem Gehäuse 2 hervor.

Figur 4 zeigt die erfindungsgemäße Halteeinrichtung 1 bei geschlossenem und gegenüber dem Grundkörper 21 des Gehäuses 2 verriegeltem Deckel 22. Der Verriegelungsabschnitt 26 mit Vorsprung befindet sich mit dem Verriegelungsabschnitt 25 mit Öse in Eingriff, so dass der Deckel 22 nicht gegenüber dem Grundkörper 21 bewegt werden kann. Die Leitungen 4 sind in den jeweiligen Leitungsaufnahmen 31 positionssicher fixiert, wobei die Lasche 33 jeder Leitungsaufnahme 31 derart verbogen ist, dass sie den Einführschlitz der Leitungsaufnahme 31 vollständig überbrückt und die Leitung 4 vollumfänglich vom flexiblen Material des Einsatzes 3 umgeben ist. Um die Leitung 4 sicher in der Leitungsaufnahme 31 zu fixieren, reicht es bereits aus, wenn die Lasche 33 den Einführschlitz bei geschlossenem Deckel 22 auch zumindest abschnittsweise verschließt.

Nachfolgend wird die Anwendung der erfindungsgemäßen Halteeinrichtung 1 mit Bezug auf die beilegenden Zeichnungen beschrieben.

Bei der Montage der erfindungsgemäßen Halteeinrichtung 1 wird der Einsatz 3 in den Grundkörper 21 des Gehäuses 2 eingesetzt und dabei anhand des zylindrischen Zapfens 23, dessen Außendurchmesser auf den Innendurchmesser der Bohrung des Befestigungsabschnitts 35 des Einsatzes 3 abgestimmt ist, ausgerichtet. Bei eingesetztem Einsatz 3 durchdringen die rippenförmigen Anlagevorsprünge 34 den Gehäuseboden des Grundkörpers 21 und stehen auf der Anlageseite des Gehäuses 2 aus dem Gehäuse 2 hervor. Ein Schlitz in der Gehäusewand kann dabei groß genug sein, um ein, zwei oder sogar drei rippenförmige Anlagevorsprünge 34 zugleich aufzunehmen.

Ein Zustand, in welchem der Einsatz 3 in den Grundkörper 21 des Gehäuses 2 eingesetzt ist, ist in Figur 3 dargestellt. In diesem Zustand kann die Halteeinrichtung 1 bereits an einer Trägereinrichtung (nicht dargestellt) montiert werden, wobei ein Bolzen in die Durchgangsbohrung des zylindrischen Vorsprungs 23 eingesetzt und an der Trägereinrichtung befestigt wird. Anschließend werden die zu haltenden Leitungen 4 durch die Einführschlitze in die im Wesentlichen halbkreisförmigen Halteabschnitte der Leitungsaufnahmen 31 eingesetzt und der Gehäusedeckel 22 wird verschlossen. Dabei wird der Gehäusedeckel 22 über das Scharnier gegenüber dem Grundkörper 21 verschwenkt, bis der Vorsprung des Verriegelungsabschnitts 26 in die Öse des Verriegelungsabschnitts 25 eingreift und der Deckel 22 gegenüber dem Grundkörper 21 verriegelt ist.

Ein Zustand, in welchem die Leitungen 4 im Gehäuse aufgenommen sind, und der Deckel 22 gegenüber dem Grundkörper 21 verriegelt ist, ist in Figur 4 dargestellt.

Sofern die Halteeinrichtung 1 nicht bereits an einer Trägereinrichtung montiert wurde, kann die Halteeineinrichtung 1 auch erst nach dem Einsetzen der Leitungen 4 an der Trägereinrichtung und nach dem Schließen des Deckels 22 montiert werden. Dabei wird ein Bolzen in die Durchgangsbohrungen des Grundkörpers 21, des Deckels 22 und des Einsatzes 3 eingesetzt und an der Trägereinrichtung (nicht dargestellt) befestigt. Je nach Belieben kann auch der Deckel 22 gleichzeitig gegenüber der Trägereinrichtung festgelegt werden. Dazu weist ein Kopf eines in die Durchgangsbohrungen des Grundkörpers 21, des Deckels 22 und des Einsatzes 3 deckelseitig einzusetzenden Bolzens einen größeren Durchmesser auf als zumindest die Durchgangsbohrung des Deckels 22. Der Deckel 22 kann nicht geöffnet werden, wenn die Halteeinrichtung 1 entsprechend montiert ist. Dies verhindert ein unbeabsichtigtes Öffnen des Deckels 22 nach der Montage.

Die erfindungsgemäße Halteeinrichtung 1 lässt sich besonders vorteilhaft im Automobilbereich einsetzen, wo Leitungen, in denen mit Druck beaufschlagte Flüssigkeiten geführt werden, an der Karosserie befestigt und akustisch abgekoppelt werden müssen.

## Patentansprüche

1. Halteeinrichtung (1) für mindestens eine Leitung (4) oder dergleichen, umfassend: Ein Gehäuse (2) mit einem Grundkörper (21) und einem gegenüber dem Grundkörper (21) bewegbaren Deckel (22), einen Einsatz (3) zum Einsetzen in das Gehäuse (2), wobei der Einsatz (3) zumindest eine im Wesentlichen U-förmige Leitungsaufnahme (31) aufweist, in welche die Leitung (4) durch einen Einführschlitz in radialer Richtung einbringbar ist, so dass der Einsatz (3) die Leitung (4) zumindest abschnittsweise umgibt, **dadurch gekennzeichnet, dass** der Einsatz (3) eine flexible Lasche (33) aufweist, welche ausgebildet ist, um den Einführschlitz bei geschlossenem Deckel (22) zumindest abschnittsweise zu verschließen.

2. Halteeinrichtung (1) nach Anspruch 1, wobei der Einsatz (3) mindestens einen flexiblen Haltevorsprung (22) aufweist, der in die Leitungsaufnahme (31) hervorsteht.

3. Halteeinrichtung (1) nach Anspruch 2, wobei der Haltevorsprung als Halterippe (32) ausgebildet ist.

4. Halteeinrichtung (1) nach einem der vorangegangenen Ansprüche, wobei der Einsatz (3) zumindest einen flexiblen Anlagevorsprung (34) aufweist, welcher auf einer Anlageseite der Halteeinrichtung (1) aus dem Gehäuse (2) hervorsteht.

5. Halteeinrichtung (1) nach Anspruch 4, wobei der Anlagevorsprung (34) eine Gehäusewand durchdringt.

6. Halteeinrichtung (1) nach Anspruch 4 oder 5, wobei der Anlagevorsprung (34) rippenförmig ausgebildet ist.

7. Halteeinrichtung (1) nach einem der vorangegangenen Ansprüche, wobei der Grundkörper (21) und der Deckel (22) gelenkig verbunden und gegeneinander verschwenkbar sind.

8. Halteeinrichtung (1) nach einem der vorangegangenen Ansprüche, wobei das Gehäuse (2) einen Verriegelungsabschnitt (25) mit einem Vorsprung aufweist, welcher mit einem Verriegelungsabschnitt (26) mit einer Öse in Eingriff bringbar ist, um das Gehäuse (2) bei geschlossenem Deckel (22) zu verriegeln.

9. Halteeinrichtung nach einem der vorangegangenen Ansprüche, wobei der Grundkörper (21), der Deckel (22) und der Einsatz (3) jeweils eine Durchgangsbohrung zur Aufnahme eines Bolzens aufweisen, wobei die Mittelpunkte der Durchgangsbohrungen bei geschlossenem Deckel (22) im Wesentlichen auf einer Achse liegen.

10. Halteeinrichtung (1) nach Anspruch 2, wobei der Haltevorsprung (32) einteilig mit dem Einsatz (3) ausgebildet ist.

11. Halteeinrichtung (1) nach einem der vorangegangenen Ansprüche, wobei die Lasche (33) einteilig mit dem Einsatz (3) ausgebildet ist.

12. Halteeinrichtung (1) nach Anspruch 4, wobei der Anlagevorsprung (34) einteilig mit dem Einsatz (3) ausgebildet ist.
